(19)

Europäisches
Patentamt
European
Patent Office
Office européen
des brevets

(11) **EP 1 772 608 A1**

(12) **EUROPEAN PATENT APPLICATION**

(43) Date of publication:
    **11.04.2007 Bulletin 2007/15**

(51) Int Cl.:
    *F02B 37/24* $^{(2006.01)}$    *F02B 37/12* $^{(2006.01)}$
    *F01D 7/00* $^{(2006.01)}$

(21) Application number: **05425711.8**

(22) Date of filing: **10.10.2005**

(84) Designated Contracting States:
    **AT BE BG CH CY CZ DE DK EE ES FI FR GB GR HU IE IS IT LI LT LU LV MC NL PL PT RO SE SI SK TR**
    Designated Extension States:
    **AL BA HR MK YU**

(71) Applicant: **C.R.F. SOCIETA' CONSORTILE PER AZIONI**
    **10043 Orbassano (TO) (IT)**

(72) Inventors:
    • **Lanfranco, Enrico**
      **Strada Torino, 50**
      **10043 Orbassano (IT)**

    • **Tonetti, Marco**
      **Strada Torino, 50**
      **10043 Orbassano (IT)**

(74) Representative: **Cerbaro, Elena et al**
    **STUDIO TORTA S.r.l.,**
    **Via Viotti, 9**
    **10121 Torino (IT)**

Remarks:
    Amended claims in accordance with Rule 86 (2) EPC.

(54) **Method and device for controlling geometry of a variable-geometry turbocharger, in particular for an internal-combustion engine of a motor vehicle**

(57)    Described herein is a method for controlling the geometry of a variable-geometry compressor (3), in particular for supplying a pressurized fluid to an internal-combustion engine (7). The control method includes determining a target geometry $(POS_{TARGET})$ of the compressor (3) such as to maximize the efficiency of the compressor (3) in the current operating condition, and controlling the geometry of the compressor (3) based on the target geometry $(POS_{TARGET})$. The target geometry $(POS_{TARGET})$ is determined based on at least one quantity chosen from the group comprising pressure $(P_{AIR})$, temperature $(T_{AIR})$ and flow rate $(M_{AIR})$ of the fluid to be pressurized, pressure $(P_{BOOST})$ and temperature $(T_{BOOST})$ of the pressurized fluid, and engine speed $(RPM)$.

Fig.2

**EP 1 772 608 A1**

**Description**

The present invention relates in general to a method and device for controlling geometry of a variable-geometry turbocharger, and more in particular for controlling geometry of the variable-geometry compressor of a turbocharger of an internal-combustion engine of a motor vehicle.

As is known, in the automotive field turbocompressors are used for supercharging engines by exploiting the energy contained in the exhaust gases and are basically made up of two volutes that enclose two blade impellers, fixedly connected to one another via a shaft and arranged, respectively, on the exhaust manifold and on the intake manifold. The first impeller (turbine) receives motion from the exhaust gases that are purposely conveyed thereon and transmits it to the second impeller (compressor), which imparts the motion to the column of air present in the intake manifold, compressing it.

It is likewise known to control the supercharging pressure of supercharged engines via mechanisms set on the turbine side of the turbocompressors and designed to control the flow of the exhaust gases that impinges upon the impeller of the turbine, and consequently the speed of rotation of the turbocompressors themselves.

Amongst these mechanisms, the two most commonly used are constituted by a valve for regulating the rate of flow of the exhaust gases that impinge upon the turbine, commonly known by the name of wastegate valve, and by variable-geometry turbine (VGT).

In particular, the wastegate valve is a pressure-relief valve that goes into action when the conditions of operation of the engine tend to create a supercharging pressure higher than the admissible one, reducing the flow rate of the exhaust gases directed at the turbine. The wastegate valve is generally located in parallel to the turbine and can be subject or not to electronic control by the electronic control unit for controlling the engine.

In the absence of electronic control, the wastegate valve, which is basically constituted by a membrane and by a spring calibrated as a function of the maximum level of admissible supercharging pressure, is actuated, via a rod, by a pneumatically controlled pressure chamber, which is connected to the exhaust of the compressor by a tube of small dimensions. When the pressure downstream of the compressor exceeds the value predefined in the design step, the pressure chamber acts, via the rod, on the spring of the valve, overcoming its resistance and causing opening of the valve, which bypasses the exhaust gases directed at the turbine. In this way, just one part of the exhaust gases passes through the turbine, whilst the other part exits from the valve and arrives directly at the exhaust. By varying pre-loading of the spring the maximum supercharging pressure can be varied.

As an alternative to the solution described above, the wastegate valve can be controlled electronically by the electronic control unit for controlling the engine. In this case, the control unit regulates in a closed-loop way the position of the wastegate valve by acting on a valve for modulating the pressure so as to achieve the pre-set target of supercharging in the current engine point.

The wastegate valve enables the use of a turbocharger of small dimensions, in capable, however, of supplying high supercharging pressures even when the exhaust gases are still quantitatively few, i.e., at low-to-medium engine speed This system enables response times (i.e., the characteristic time that elapses so that the engine can pass from "induction" operation to "supercharged" operation) are quite short.

In turbocompressors with variable-geometry turbine, instead, the volute of the turbine opens on the impeller through a series of mobile blades fitted on a ring in such a way as to be simultaneously orientable via a purposely designed actuator constituted by a solenoid negative-pressure valve or else by an electric motor and managed by an electronic control unit, for example the control unit for controlling the engine. By varying the orientation of the mobile blades, it is possible to accelerate the flow of the exhaust gases, thus controlling, in the final analysis, the supercharging pressure of the engine. This system enables in fact having a control of the sections of passage of the exhaust gases and consequently control of the degrees of supercharging obtainable at the different speed

In particular, at low engine speed and load, the blades are set in a position of maximum closing so as to reduce the section of passage of the exhaust gases and consequently increasing the speed thereof, thus increasing the thrust of the turbine. At high speed, instead, the section of passage of the gases through the blades is increased so as to reduce the harmful counterpressure due to the passage of the exhaust gases in the impeller of the turbine that prevents these from flowing freely in the exhaust manifold, so that the exhaust gases impinge upon the impeller with a lower peripheral speed. The speed of rotation of the turbine thus tends to decrease and to settle at a value adequate for correct operation of the engine.

In variable-geometry turbocompressors, the wastegate valve is superfluous in so far as the supercharging pressure is controlled by acting on the angle of the mobile blades.

Turbodiesel engines equipped with turbocompressors with variable-geometry turbine have a delivery of power better than that of traditional turbodiesel engines. Said turbocompressors, in fact, enable a faster response and a greater torque at low speed, and at the same time enable delivery of a higher power at high speed.

The position of the orientable blades of the variable-geometry turbine is controlled by the closed-loop electronic control unit on the basis of the error existing between the effective supercharging pressure, measured for example via a purposely designed pressure sensor set along the duct that connects the delivery of the compressor with the engine, and a target supercharging pressure, mapped in the memory of the electronic control unit as a function of appropriate quantities, for example speed and load, atmospheric pressure, air temperature.

In the past, in simpler control systems, the closed-loop regulation of the position of the blades of the variable-geometry turbine was performed by the electronic control unit implementing a controller of a proportional-integral type, which receives at input the error of supercharging pressure and supplies at output a control signal for the actuator of the blades of the variable-geometry turbine such as to eliminate the error of supercharging pressure, said control signal being generated by implementing a transfer function having two multiplying coefficients, for the proportional branch and for the integral branch respectively, which assume a fixed value whatever the point of operation of the engine.

The proportional-integral controller, however, presented the drawback of not being suitable for optimal management of the delivery of power of a turbodiesel engine with variable-geometry turbine during acceleration in so far as the system to be controlled presented an evident delay of response ("turbo-lag") and a markedly non-linear behaviour. The use of a simple controller of the proportional-integral type was not able in fact to prevent, during manoeuvres of fast acceleration, the onset of a overshoot peak of the supercharging pressure with respect to the desired value, and a subsequent step of settling to the desired value with oscillations having a low damping coefficient.

For this reason, in the patent No. EP-B1-0 786 589 filed in the name of the present applicant on Jan. 23, 1997 and granted on Nov. 14, 2001, it has been proposed to generate the control signal of the actuator of the blades of the variable-geometry turbine implementing, in addition to the aforementioned proportional-integral controller, also a proportional-derivative controller, the two controllers being alternatively enabled according to the engine operating conditions. In particular, upon engine ignition, control of the supercharging pressure is entrusted to the proportional-integral controller. When the supercharging pressure undergoes a sharp increase (derivative of the supercharging pressure higher than a threshold), the control of the supercharging pressure is entrusted to the proportional-derivative controller, which sends it back again to the proportional-integral controller as soon as the supercharging pressure completes the step of increase (or after a maximum pre-set time).

According to a further aspect of the invention described in the aforementioned patent, some of the multiplying coefficients present in the transfer functions of the controllers, for example the multiplying coefficients of the proportional branch and of the integral branch of the transfer function of the proportional-integral controller, as well as the initial state that must be supplied to the integral branch of the latter when control of the supercharging pressure is again entrusted thereto and that must be consistent with the previous evolutions of the control, are determined as a function of some engine quantities, such as, for example, engine speed and load.

Even though widely used in the past, this control system has subsequently, in the last few years, been supplanted by control systems that implement control strategies based upon control laws of a proportional-integral-derivative (PID) type, in which the multiplying coefficients of the proportional, integral and derivative branches (KP, KI and KD) are calculated as a function of the point of operation of the engine.

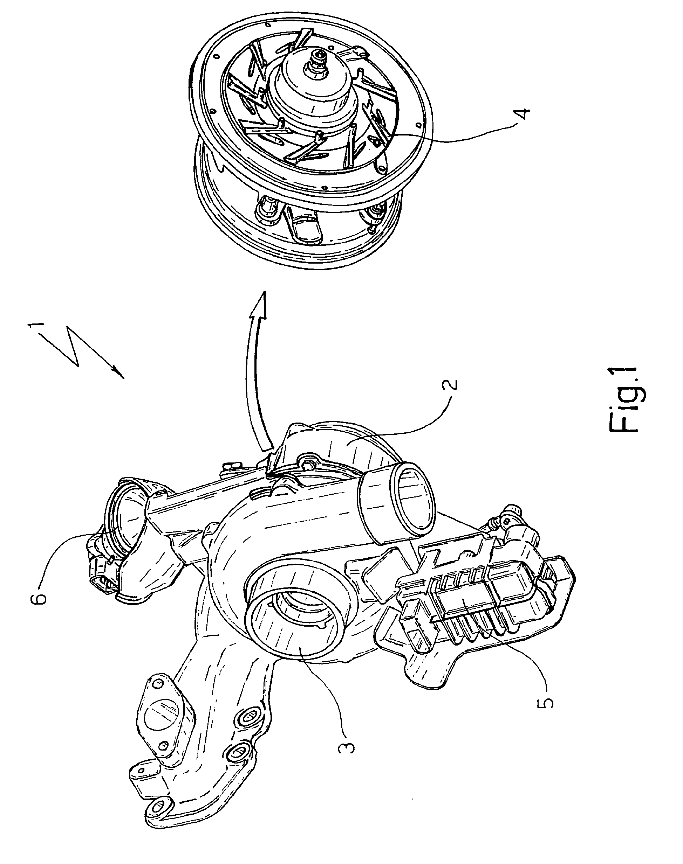

Recently, it has also been proposed to envisage a variable geometry also on the compressor side, in addition to the one on the turbine side, i.e., to control the supercharging pressure of the engine using a turbocharger with compressor and turbine both of a variable-geometry type. A turbocharger with variable-geometry compressor (VGC) is by way of example shown in Figure 1, in which the reference number 1 designates the turbocharger as a whole, and numbers 2 and 3 designate the variable-geometry turbine and the variable-geometry compressor, respectively. Designated by 4 are orientable blades set in the diffuser of the compressor 3, by varying the inclination of which it is possible to vary accordingly the geometry of the compressor 3, and designated by 5 and 6 are the actuators of the orientable blades of the turbine 2 and of the compressor 3, respectively.

The Applicant has been able to note experimentally that the control of the inclination of the blades set in the diffuser of the variable-geometry compressor enables maximization of the efficiency of the compressor itself in the various operating conditions, and hence extension of its range of operation with respect to a compressor with fixed geometry.

In the light of the above, the Applicant has conducted research aimed at developing a strategy for controlling the turbocharger, in which the variable-geometry turbine performs the function of regulating the supercharging pressure, whilst the variable-geometry compressor performs the function of regulating the efficiency of the compressor itself, and in which the strategy of management of the variable-geometry compressor is independent and separate from the strategy for management of the turbine, of which it must in effect represent an extension.

The aim of the present invention is to provide a completely new strategy for controlling the variable-geometry compressor, which will enable maximization of the efficiency of the compressor in the various operating conditions, without, however, interfering with the strategy of control of the variable-geometry turbine.

According to the present invention, there are provided method and device for controlling geometry of a variable-geometry compressor, as defined in Claims 1 and 16, respectively.

According to the present invention, there are also provided method and device for controlling geometry of a variable-geometry turbocharger with variable-geometry turbine and compressor, as defined in Claims 12 and 17, respectively.

According to the present invention are a method and a device for controlling supercharging pressure of a supercharged internal-combustion engine, as defined in Claims 15 and 18, respectively.

Finally, according to the present invention there is also provided a supercharged internal-combustion engine equipped with a variable-geometry turbocharger with variable-geometry turbine and compressor, as defined in Claim 19.

For a better understanding of the present invention some preferred embodiments thereof will now be described, purely by way of non-limiting example, with reference to the attached drawings, wherein:

- Figure 1 is a perspective view of a turbocharger with variable-geometry compressor;
- Figure 2 shows a block diagram of an internal-combustion engine provided with a turbocharger with turbine and compressor, both with variable geometry, and of a corresponding control device; and
- Figures 3-9 show block diagrams of different control strategies implemented by the electronic control unit of Figure 2.

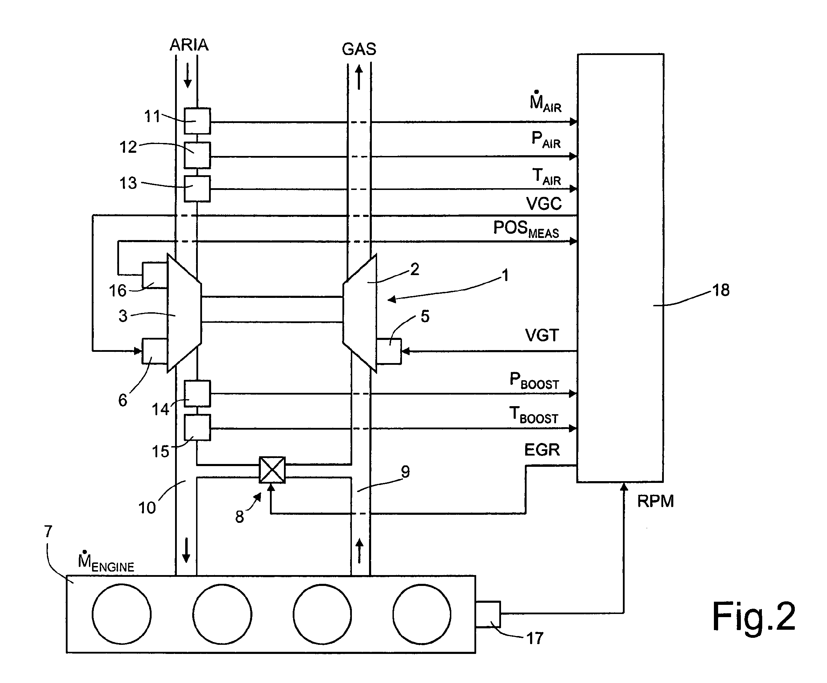

Figure 2 shows a block diagram in which the elements already illustrated in Figure 1 are designated by the same reference numbers. In particular, in Figure 2 the reference number 7 designates a supercharged internal-combustion engine, for example a turbodiesel engine with an exhaust-gas recirculation (EGR) system 8, the reference numbers 9 and 10 designate, respectively, the exhaust manifold, along which the turbine 2 is set, and the intake manifold, along which the compressor 3 is set, whilst numbers 11, 12 and 13 designate, respectively, a flow meter, a pressure sensor, and a temperature sensor, arranged along the intake manifold 10, upstream of the compressor 3, for measuring, respectively, the mass flow rate $\dot{M}_{AIR}$, the pressure $P_{AIR}$ and the temperature $T_{AIR}$ of the air taken in (pressure and temperature of the air upstream of the compressor 3, i.e., atmospheric pressure and ambient temperature). The reference numbers 14 and 15 designate, respectively, a pressure sensor and a temperature sensor arranged along the intake manifold 10, downstream of the compressor 3, for measuring, respectively, the supercharging pressure $P_{BOOST}$ and the supercharging temperature $T_{BOOST}$ (i.e., the pressure and temperature of the air downstream of the compressor 3), number 16 designates a position sensor integrated in the actuator 6 of the orientable blades 4 of the compressor 3 for measuring the position $POS_{MEAS}$ of a control rod of the orientable blades 4 themselves, number 17 designates a speed sensor coupled to the engine 7 for measuring its speed of rotation $RPM$, and number 18 designates the electronic control unit for controlling the turbocharger 1, which implements a strategy for controlling the geometry of the turbine 2, through which the supercharging pressure of the engine 7 is controlled, and a strategy for controlling the geometry of the compressor 3, through which the efficiency of the compressor 3 itself is controlled in the various operating conditions.

The strategy for controlling the geometry of the turbine 2 does not form the subject of the present invention, so that it will not be described in detail hereinafter. For example, the electronic control unit 18 can implement any of the control strategies amongst the ones existing in the literature or currently used in the automotive field, whether closed-loop or open-loop. Preferably, but not necessarily, the electronic control unit 18 can implement the adaptive pressure controller described in the aforementioned patent No. EP-B1-0 786 589 filed in the name of the present applicant and extensively discussed previously, or else an adaptive pressure controller of the PID type described in the introductory part of the present application.

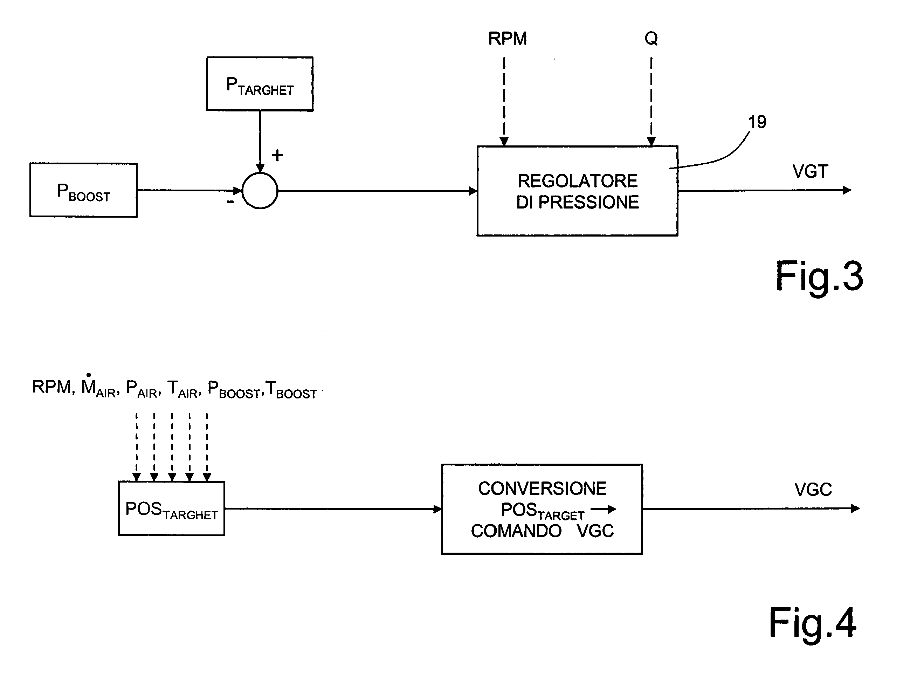

For completeness of information, then, Figure 3 shows by way of example a block diagram of the strategy for controlling the turbine 2, in which the reference number 19 designates the adaptive pressure controller, which receives at input the error between the effective supercharging pressure $P_{BOOST}$ and the target supercharging pressure $P_{TARGET}$ and supplies at output a control signal VGT for the actuator 5 of the orientable blades of the turbine 2, such as to eliminate said pressure error.

According to an aspect of the present invention, the Applicant has developed a strategy for controlling the geometry of the compressor 3 based upon the determination of the optimal position of the orientable blades 4 as a function of the current condition of operation of the engine. Attainment of said optimal position is preferably, but not necessarily, entrusted to a closed-loop control strategy, which operates on the basis of the error existing between the effective position $POS_{MEAS}$ of the orientable blades 4 and a target position $POS_{TARGET}$ of the orientable blades 4 determined in such a way as to maximize the efficiency of the compressor 3.

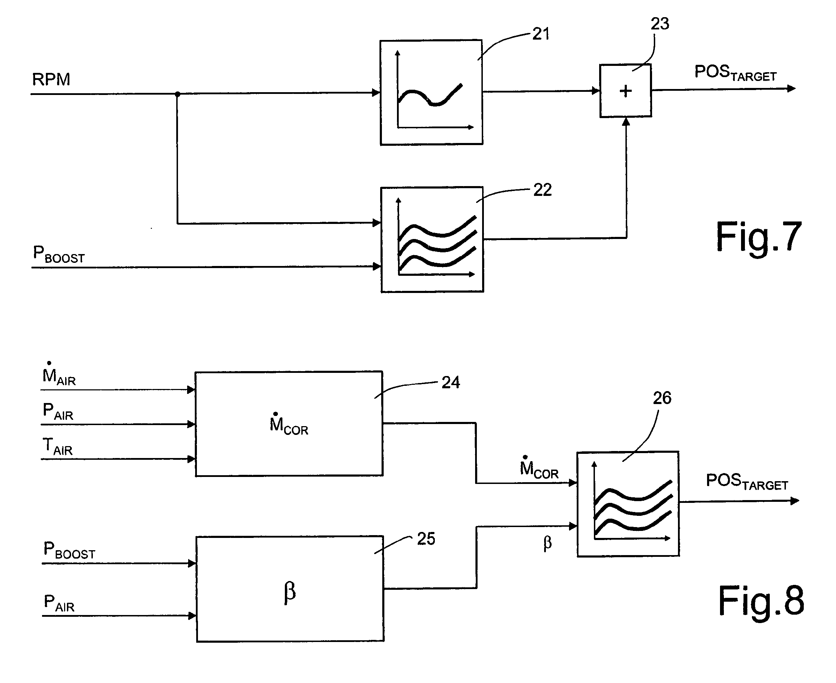

According to a further aspect of the present invention, the target position $POS_{TARGET}$ of the orientable blades 4 of the compressor 3 is determined, in the way described in detail in what follows with reference to Figures 7-9, as a function of one or more measured or estimated quantities, in particular the mass flow rate $\dot{M}_{AIR}$, the pressure $P_{AIR}$, and the temperature $T_{AIR}$ of the air taken in by the engine 7, the supercharging pressure $P_{BOOST}$, and the supercharging temperature $T_{BOOST}$ of the engine 7, and finally the speed $RPM$.

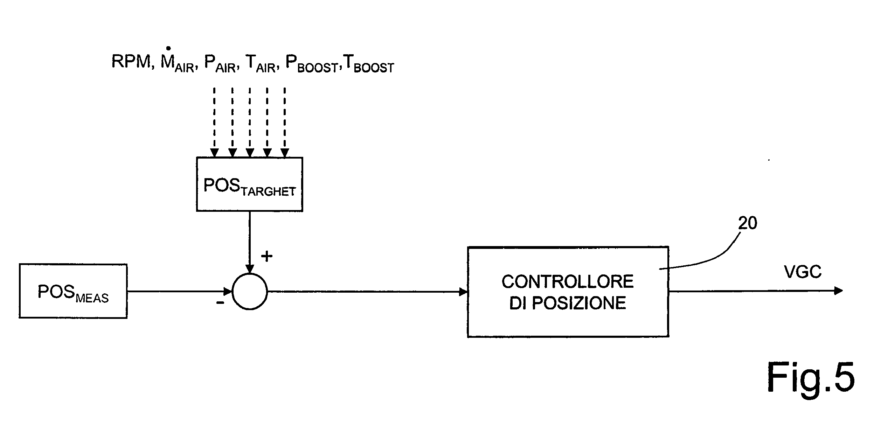

Figures 4 and 5 show two block diagrams of the working principle of the strategy for controlling the geometry of the compressor 3 according to the present invention. In particular, Figure 4 shows the block diagram of an open-ring control strategy, in which the target position $POS_{TARGET}$ of the orientable blades 4 of the compressor 3 is converted into a corresponding control signal VGC for the actuator 6 of the orientable blades 4 themselves via a table or else a mathematical formula, without thus requiring the measurement of the effective position $POS_{MEAS}$ of the orientable blades 4, whilst Figure 5 shows the block diagram of a closed-loop control strategy based upon the measurement of the effective position $POS_{MEAS}$ of the orientable blades 4 and upon the use of an adaptive position controller, designated by 20, which receives at input the error existing between the effective position $POS_{MEAS}$ and the target position $POS_{TARGET}$ of the orientable blades 4 of the compressor 3 and supplies at output the control signal VGC for the actuator 6 of the orientable blades 4 of the compressor 3, such as to eliminate said position error.

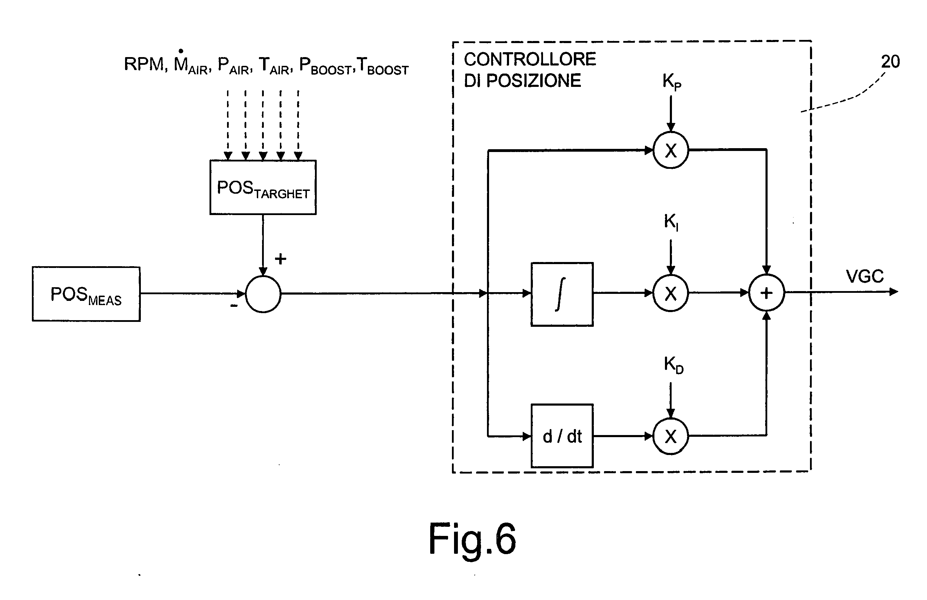

The electronic control unit 18 can implement any position controller amongst the ones existing in the literature. Preferably, but not necessarily, the electronic control unit 18 implements a proportional-integral-derivative position controller of the type illustrated by way of example in Figure 6, in which the symbols $K_P$, $K_I$ and $K_D$ indicate the multiplying coefficients, respectively, for the proportional branch, the integral branch and the derivative branch, which can assume a fixed value or else a value depending upon the engine point (speed and load).

Figures 7-9 show, instead, functional block diagrams of three different embodiments of the invention for determination of the target position $POS_{TARGET}$ of the orientable blades 4 of the compressor 3 as a function of the engine quantities listed above.

In particular, Figure 7 shows the functional block diagram of a first embodiment of the invention, in which the target position $POS_{TARGET}$ of the orientable blades 4 is determined only as a function of the speed $RPM$ and of the supercharging pressure $P_{BOOST}$.

In detail, in this embodiment, the electronic control unit 18 determines the target position $POS_{TARGET}$ of the orientable blades 4 of the compressor 3 as the sum of two contributions: a basic contribution, which is a function only of the speed $RPM$ and indicates the position of the orientable blades 4 that guarantees the maximum efficiency of the compressor 3 at the current speed, and an additive corrective contribution, which is a function both of the speed $RPM$ and of the supercharging pressure $P_{BOOST}$ and indicates the correction that it is necessary to apply to the basic contribution in order to take into account the supercharging pressure $P_{BOOST}$.

To do this, as is shown in Figure 7, in the electronic control unit 18 two maps 21, 22 are stored, the first containing values of the target position $POS_{TARGET}$ that guarantees the maximum efficiency of the compressor 3 as a function of the speed $RPM$, and the second containing values of the additive correction of position as a function of the speed $RPM$ and of the supercharging pressure $P_{BOOST}$. In particular, both of the maps 21, 22 are constructed experimentally at the test bench in an initial calibration step of the system, the first in full-load conditions of the engine 7, the second in partial-load conditions of the engine 7, determining, for each speed $RPM$, a position of the orientable blades 4 that guarantees the maximum efficiency of the compressor 3 and, given the same speed $RPM$, for each supercharging pressure $P_{BOOST}$ the additive correction to be made to said position in order to maximize the efficiency of the compressor 3 also as a function of said quantity.

The values supplied by the first and second maps 21, 22 corresponding to current values of speed $RPM$ and supercharging pressure $P_{BOOST}$ are then summed in a block 23 to obtain the target position $POS_{TARGET}$ of the orientable blades 4 corresponding to the maximum efficiency of the compressor 3.

Thanks to the fact that it is based upon just two quantities, and in particular basically upon the speed, measurement of which is fast and precise, this embodiment presents the considerable advantage of being simple, of not requiring sensors in addition to the ones already normally present, and of being easy to calibrate.

Figure 8 shows, instead, the functional block diagram of a second embodiment of the invention, in which the calculation of the target position $POS_{TARGET}$ of the orientable blades 4 of the compressor 3 is based directly upon the characteristic curves of the compressor 3, supplied by the manufacturer and commonly referred to as "compressor maps".

In particular, in this embodiment, the electronic control unit 18 determines the target position $POS_{TARGET}$ of the orientable blades 4 of the compressor 3 as a function of two derived quantities, namely the corrected mass flow rate of the air $\dot{M}_{COR}$ and the compression ratio $\beta$ of the compressor 3, which are in turn calculated as a function of the supercharging pressure $P_{BOOST}$, of the mass flow rate $\dot{M}_{AIR}$, of the pressure $P_{AIR}$ and of the temperature $T_{AIR}$ of the air taken in.

In detail, the corrected mass flow rate of the air $\dot{M}_{COR}$ is defined as the mass flow rate $\dot{M}_{AIR}$ of the air taken in (i.e., the air which enters the compressor 3) normalized with respect to the pressure and to the temperature of air at inlet to the compressor 3, i.e., the pressure $P_{AIR}$ and the temperature $T_{AIR}$ of the air taken in, and to a standard reference pressure $P_{REF}$ and to a standard reference temperature $T_{REF}$, for example 1 bar and, 25°C, respectively, namely:

$$\dot{M}_{COR} \;=\; \dot{M}_{AIR} \;\cdot\; \frac{P_{REF}}{P_{AIR}} \;\cdot\; \sqrt{\frac{T_{AIR}}{T_{REF}}} \qquad\qquad [1]$$

whilst the compression ratio $\beta$ is defined as the ratio between the outlet pressure and the inlet pressure of the compressor 3, i.e., the supercharging pressure $P_{BOOST}$ and the pressure of the air taken in $P_{AIR}$, namely:

$$\beta \;=\; \frac{P_{BOOST}}{P_{AIR}} \qquad\qquad [2]$$

Turbocompressor manufacturers usually characterize a fixed-geometry compressor via a table referred to as "compressor map". Said map contains the iso-speed curves and the iso-efficiency curves, represented in a Cartesian reference system, in which the abscissa represents the corrected mass flow rate of the air $\dot{M}_{COR}$, and the ordinate represents the compression ratio $\beta$ of the compressor 3. Obviously a variable-geometry compressor is characterized by $N$ maps, each corresponding to a different position of the variable-geometry blades of the compressor itself.

With reference once again to Figure 8, in detail, the electronic control unit 18 implements a calculation block 24 for evaluation of Equation [1], for determining the current value of the corrected mass flow rate of the air $\dot{M}_{COR}$ as a function of the mass flow rate $M_{AIR}$, of the pressure $P_{AIR}$, and of the temperature $T_{AIR}$ of the air taken in.

The electronic control unit 18 moreover implements a calculation block 25 for evaluation of Equation [2] for determining the current value of the compression ratio $\beta$ as a function of the pressure of the air taken in $P_{AIR}$ and of the supercharging pressure $P_{BOOST}$.

The electronic control unit 18 finally stores a map 26, by means of which it is possible to calculate the values of target position $POS_{TARGET}$ of the orientable blades 4 of the compressor 3 as a function of the corrected mass flow rate of the air $\dot{M}_{COR}$ and of the compression ratio $\beta$.

Given that the calculation blocks 24 and 25 implement, respectively, the mathematical formulas [1] and [2], they do not require calibration, whilst the map 26 can be constructed experimentally at the test bench in an initial calibration step, determining, for each corrected mass flow rate of the air $\dot{M}_{COR}$ and for each compression ratio $\beta$, the target position $POS_{TARGET}$ of the orientable blades 4 corresponding to the maximum efficiency of the compressor 3. As an alternative to said experimental approach, the map 26 can be calibrated by using the compressor maps supplied by the manufacturer. In this case, it is necessary to identify in the map 26, for each pair of values of corrected flow rate and compression ratio the corresponding value of efficiency on each of the $N$ compressor maps. In this way $N$ values of efficiency, corresponding to $N$ different positions of the variable-geometry blades of the compressor, are obtained. Consequently, the higher efficiency is chosen and the corresponding value of position of the orientable blades 4 is written in the map 26 in a location corresponding to the pair of values of the corrected flow rate and of the compression ratio in question.

Thanks to the fact that it is based upon maps of the compressor supplied directly by the manufacturer thereof and to the fact that the position of maximum efficiency does not call for corrections of the same type as the ones made in the preceding embodiment, this embodiment presents the considerable advantage of being easy to calibrate.

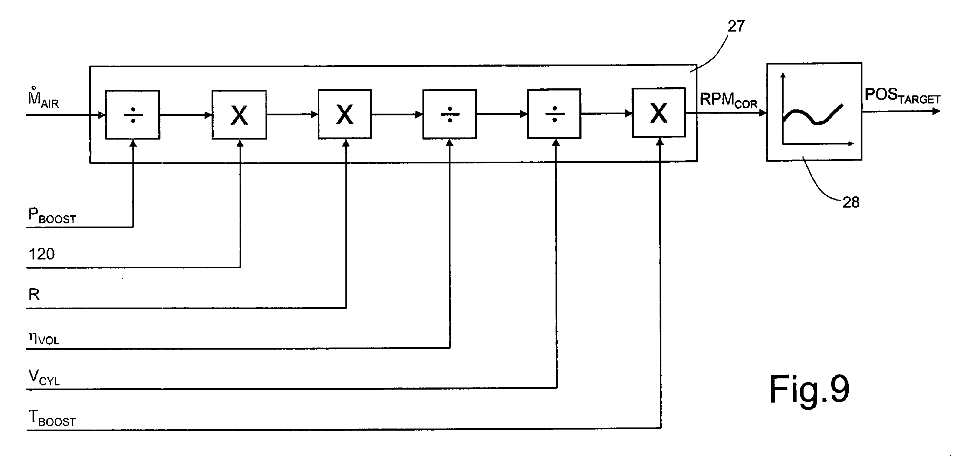

Figure 9 shows the functional block diagram of a third embodiment of the invention, in which the target position $POS_{TARGET}$ of the orientable blades 4 of the compressor 3 is calculated as a function of a fictitious engine quantity, to be precise a corrected or equivalent speed $RPM_{COR}$, the function of which, in control terms, will emerge clearly from the ensuing description and which is estimated as a function of the mass flow rate $\dot{M}_{AIR}$ of the air taken in and of the supercharging pressure $P_{BOOST}$ and of the supercharging temperature $T_{BOOST}$ using a physical model that implements a method of estimation known by the name of speed density, hereinafter described in detail.

In detail, the speed-density method is based upon the state equation of perfect gases, applied to the gaseous mixture at engine induction, downstream of the compressor 3, as follows:

$$\frac{P_{BOOST}}{\rho} = R \cdot T_{BOOST} \;\Rightarrow\; \rho = \frac{P_{BOOST}}{R \cdot T_{BOOST}} \qquad\qquad [3]$$

where $\rho$ is the density of the air taken in by the engine 7 and R is a characteristic constant of the gaseous mixture taken in.

The density $\rho$ can be expressed as ratio between the mass flow rate $\dot{M}_{ENGINE}$ and the volumetric flow rate $\dot{V}_{ENGINE}$ of the air taken in by the engine 7, so that:

$$\rho = \frac{\dot{M}_{ENGINE}}{\dot{V}_{ENGINE}} \;\Rightarrow\; \dot{M}_{ENGINE} = \dot{V}_{ENGINE} \cdot \frac{P_{BOOST}}{R \cdot T_{BOOST}} \qquad\qquad [4]$$

The volumetric flow rate $\dot{V}_{ENGINE}$ is directly proportional to the speed *RPM,* to the displacement $V_{CYL}$, and to the coefficient of volumetric filling $\eta_{VOL}$ of the engine, according to the formula:

$$\dot{V}_{ENGINE} = \eta_{VOL} \cdot \frac{RPM}{120} \cdot V_{CYL} \qquad [5]$$

From the above formulas [4] and [5], with simple substitutions it is possible then to obtain the mass flow rate $\dot{M}_{ENGINE}$ taken in by the engine 7 as a function of the speed *RPM* and of the supercharging pressure $P_{BOOST}$ and of the supercharging temperature $T_{BOOST}$, as follows:

$$\dot{M}_{ENGINE} = \eta_{VOL} \cdot \frac{RPM}{120} \cdot V_{CYL} \cdot \frac{P_{BOOST}}{R \cdot T_{BOOST}} \qquad [6]$$

The above formula is commonly known as the "speed-density method formula".
Expressing the above formula so as to bring out the speed *RPM,* we obtain

$$RPM = \dot{M}_{ENGINE} \cdot \frac{120}{\eta_{VOL} \cdot V_{CYL}} \cdot \frac{R \cdot T_{BOOST}}{P_{BOOST}} \qquad [7]$$

As in the case of formula [7], the following fictitious engine quantity is defined, referred to as corrected or equivalent speed $RPM_{COR}$:

$$RPM_{COR} = \dot{M}_{AIR} \cdot \frac{120}{\eta_{VOL} \cdot V_{CYL}} \cdot \frac{R \cdot T_{BOOST}}{P_{BOOST}} \qquad [8]$$

where $\dot{M}_{AIR}$ is the flow rate of the fluid to be compressed by the compressor 3.
As is evident from formulas [7] and [8], the corrected speed $RPM_{COR}$ coincides with the effective speed *RPM* when the mass flow rate $\dot{M}_{AIR}$ of the fluid to be compressed coincides with the mass flow rate $\dot{M}_{ENGINE}$ taken in by the engine 7. In EGR engines, this occurs in stationary conditions and in the absence of exhaust-gas recirculation. When instead the exhaust-gas recirculation is active, the mass flow rate $\dot{M}_{AIR}$ measured by the flow meter 11 is lower than the one effectively taken in by the engine 7, so that the corrected speed $RPM_{COR}$ is lower than the effective speed *RPM.* The corrected speed $RPM_{COR}$ is consequently a fictitious engine quantity, without any physical meaning, but useful for the purposes of the control of the orientable blades 4 of the compressor 3 in so far as it is correlated to the effective flow rate in the compressor 3 and to the supercharging pressure $P_{BOOST}$ generated by the compressor 3 itself. Furthermore, the introduction of the corrected speed $RPM_{COR}$ renders the use of an additional corrective map of the type used in the first embodiment superfluous.
With reference once again to Figure 9, in this embodiment, the electronic control unit 18 implements a block 27 for computing the corrected speed $RPM_{COR}$ according to the preceding formula [8], and stores a map 28 containing values of the target position $POS_{TARGET}$ of the orientable blades 4 of the compressor 3 as a function of the corrected speed $RPM_{COR}$, and constructed experimentally at the test bench in an initial step of calibration of the system in conditions of full load, in a way similar to the map 21 in the first embodiment of the invention previously described with reference to Figure 7.
In full-load conditions, exhaust-gas recirculation is not active, and consequently the corrected speed $RPM_{COR}$ coincides with the effective speed *RPM.* Consequently, the calibration of the map 28 can be performed in a way similar to what was described previously for the aforementioned map 21, i.e., determining, for each speed *RPM,* the target position $POS_{TARGET}$ of the orientable blades 4 corresponding to which the maximum efficiency of the compressor 3.

Calibration of the map 28 is consequently performed in full-load conditions, and it is not necessary to introduce any correction to the partial loads as previously proposed in the first embodiment described with reference to Figure 7, in so far as said correction is implicit in the concept of "corrected speed", in so far as it is a function of the air flow rate $\dot{M}_{AIR}$ through the compressor 3 and of the supercharging pressure $P_{BOOST}$ generated by the compressor 3 itself.

The coefficient of volumetric filling $\eta_{VOL}$ of the engine 7 can be calibrated at a constant value or else be calculated on the basis of the current engine conditions, typically speed and load.

From an examination of the characteristics of the control device according to the present invention, the advantages that it makes possible are evident.

In particular, the strategy for controlling the geometry of the compressor 3 enables maximization of the efficiency of the compressor 3 itself in the various operating conditions, without interfering with the strategy for controlling the geometry of the turbine 2, through which the supercharging pressure of the engine 7 is controlled. The absence of interference of the strategy for controlling the geometry of the compressor 3 with the strategy for controlling the geometry of the turbine 2 enables the latter to be left unvaried, thus making possible the use of strategies that have already been amply tested.

Finally, it is clear that modifications and variations can be made to the invention described and illustrated herein, without thereby departing from the sphere of protection of the present invention, as defined in the annexed claims.

For example, in the first embodiment of the invention, the electronic control unit 18 could determine the target position $POS_{TARGET}$ of the orientable blades 4 of the compressor 3 solely on the basis of the fundamental contribution that is a function of the speed $RPM$, i.e., without envisaging any additive corrective contribution that is a function of the speed $RPM$ and of the supercharging pressure $P_{BOOST}$.

Furthermore, the idea underlying the present invention can be applied to any type of variable-geometry compressor, irrespective of the means used for varying the geometry thereof and of the application of the compressor. For example, the idea underlying the present invention can be applied to compressors the geometry of which is varied using means different from the orientable blades described previously or to compressors used in different fields from the automotive one for increasing the pressure of any operating fluid.

**Claims**

1. A method for controlling geometry of a variable-geometry compressor (3), in particular for supplying a pressurized fluid to an internal-combustion engine (7); said method being **characterized in that** it comprises:

   • determining a target geometry ($POS_{TARGET}$) of said compressor (3); and
   • controlling the geometry of said compressor (3) based on said target geometry ($POS_{TARGET}$).

2. The method according to Claim 1, wherein said target geometry ($POS_{TARGET}$) is determined so as to maximize the efficiency of the compressor (3) in the current operative condition of the compressor (3) itself.

3. The method according to Claim 1 or Claim 2, further comprising:

   • determining an effective geometry ($POS_{MEAS}$) of said compressor (3);
   and wherein controlling the geometry of said compressor (3) comprises:
   • closed-loop controlling the geometry of said compressor (3) based on said target geometry ($POS_{TARGET}$) and said effective geometry ($POS_{MEAS}$).

4. The method according to any one of the preceding claims, for a variable-geometry compressor (3) provided with blades (4) that are orientable in response to a control signal (VGC), wherein determining a target geometry ($POS_{TARGET}$) of said compressor (3) comprises:

   • determining a target position ($POS_{TARGET}$) of said orientable blades (4),

   and wherein controlling the geometry of said compressor (3) comprises:

   • generating said control signal (VGC) based on said target position ($POS_{TARGET}$).

5. The method according to any one of the preceding claims, wherein said target geometry ($POS_{TARGET}$) is determined based on at least one quantity chosen from the group comprising pressure ($P_{AIR}$), temperature ($T_{AIR}$), and flow rate ($\dot{M}_{AIR}$) of the fluid to be pressurized, pressure ($P_{BOOST}$) and temperature ($T_{BOOST}$) of the pressurized fluid, and engine speed (*RPM*).

**6.** The method according to Claim 5, wherein determining a target geometry (*POS*$_{TARGET}$) comprises:

• determining a basic contribution based on the engine speed (*RPM*); and
• determining said target geometry (*POS*$_{TARGET}$) based on said basic contribution.

**7.** The method according to Claim 6, wherein determining a target geometry (*POS*$_{TARGET}$) of said compressor (3) further comprises:

• determining a corrective contribution based on the engine speed (*RPM*) and of the pressure (*P*$_{BOOST}$) of the pressurized fluid;
and wherein determining said target geometry (*POS*$_{TARGET}$) comprises:
• determining said target geometry *(POS*$_{TARGET}$) based on said basic contribution and said corrective contribution.

**8.** The method according to Claim 7, wherein determining said target geometry (*POS*$_{TARGET}$) comprises:

• adding said basic contribution and said corrective contribution together.

**9.** The method according to Claim 5, wherein determining a target geometry *(POS*$_{TARGET}$) comprises:

• determining a corrected flow rate ($\dot{M}_{COR}$) of said compressor (3) based on the pressure (*PAIR*), the temperature (*T*$_{AIR}$), and the flow rate ($\dot{M}_{AIR}$) of the fluid to be pressurized;
• determining a compression ratio (β) of said compressor (3) based on the pressure (*PAIR*) of the fluid to be pressurized and the pressure *(P*$_{BOOST}$) of the pressurized fluid; and
• determining said target geometry *(POS*$_{TARGET}$) based on said corrected flow rate ($\dot{M}_{COR}$) and of said compression ratio (β) of said compressor (3).

**10.** The method according to Claim 5, wherein determining a target geometry *(POS*$_{TARGET}$) comprises:

• determining a corrected engine speed *(RPM*$_{COR}$) based on the flow rate ($\dot{M}_{AIR}$) of the fluid to be pressurized and the pressure *(P*$_{BOOST}$) and the temperature *(T*$_{BOOST}$) of the pressurized fluid; and
• determining said target geometry *(POS*$_{TARGET}$) based on said corrected engine speed (*RPM*$_{COR}$) .

**11.** The method according to Claim 10, wherein said corrected engine speed *(RPM*$_{COR}$) is computed according to the following formula:

$$RPM_{COR} \;=\; \dot{M}_{AIR} \;\cdot\; \frac{120}{\eta_{VOL} \;\cdot\; V_{CYL}} \;\cdot\; \frac{R \;\cdot\; T_{BOOST}}{P_{BOOST}}$$

wherein:

- *RPM*$_{COR}$ is the corrected engine speed,
- $\dot{M}_{AIR}$ is the flow rate of the fluid to be pressurized,
- *P*$_{BOOST}$ is the pressure of the pressurized fluid,
- *T*$_{BOOST}$ is the temperature of the pressurized fluid,
- η$_{VOL}$ is the coefficient of engine volumetric filling;
- *V*$_{CyL}$ is the engine displacement, and
- *R* is a characteristic constant of the gaseous mixture taken in by the engine.

**12.** A method for controlling geometry of a variable-geometry turbocharger (1), in particular for supplying a pressurized fluid to an internal-combustion engine (7), said turbocharger (1) comprising a variable-geometry turbine (2) and a variable-geometry compressor (3); said method comprising:

• controlling geometry of said turbine (2); and
• controlling geometry of said compressor (3);
said method being **characterized in that** the geometry of said compressor (3) is controlled according to the control method of any one of the preceding claims.

13. The method according to Claim 12, wherein controlling the geometry of said turbine (2) comprises:

   • controlling the geometry of said turbine (2) based on a target pressure $(P_{TARGET})$ of the pressurized fluid.

14. The method according to Claim 13, wherein controlling the geometry of said turbine (2) further comprises:

   • closed-loop controlling the geometry of said turbine (2) based on said target pressure $(P_{TARGET})$ and the effective pressure $(P_{BOOST})$ of the pressurized fluid.

15. A method for controlling supercharging pressure of an internal-combustion engine (7) provided with a variable-geometry turbocharger (1) with a variable-geometry turbine (2) and a variable-geometry compressor (3); said control method comprising:

   • controlling the geometry of said turbocharger (1);
   said method being **characterized in that** the geometry of said turbocharger (1) is controlled according to the control method of any one of Claims 12 to 14.

16. A control device (18) for controlling geometry of a variable-geometry compressor (3), in particular for supplying a pressurized fluid to an internal-combustion engine (7); said control device (18) being configured to implement the control method of any one of Claims 1 to 11.

17. A control device (18) for controlling geometry of a variable-geometry turbocharger (1), in particular for supplying a pressurized fluid to an internal-combustion engine (7), said turbocharger (1) comprising a variable-geometry turbine (2) and a variable-geometry compressor (3); said control device (18) being configured to implement the control method of any one of Claims 12 to 14.

18. A control device (18) for controlling supercharging pressure $(P_{BOOST})$ of an internal-combustion engine (7) provided with a variable-geometry turbocharger (1) with a variable-geometry turbine (2) and a variable-geometry compressor (3); said control device (18) being configured to implement the control method of Claim 15.

19. An internal-combustion engine (7) comprising a variable-geometry turbocharger (1) with a variable-geometry turbine (2) and a variable-geometry compressor (3), and a control device (18) configured to control supercharging pressure $(P_{BOOST})$ of said engine (7) according to Claim 18.

**Amended claims in accordance with Rule 86(2) EPC.**

**1.** A method for controlling the geometry of a variable-geometry turbocharger (1), in particular for supplying a pressurized fluid to an internal-combustion engine (7), said turbocharger (1) comprising a variable-geometry turbine (2) and a variable-geometry compressor (3); said method comprising:

   • controlling geometry of said turbine (2); and
   • controlling geometry of said compressor (3);

said method being **characterized in that** said controlling geometry of said turbine (2) is to regulate the supercharging pressure of said internal-combustion engine (7)
and said controlling geometry of said compressor is to maximize the efficiency of the compressor (3) in the current operative condition of the compressor (3) itself, and in which the variable-geometry of said compressor is controlled independently and separately from the controlling geometry of said turbine (2).

**2.** The method according to Claim 1 wherein controlling geometry of said compressor (3) comprises:

   • determining a target geometry $(POS_{TARGET})$ of said compressor (3); and

• controlling the geometry of said compressor (3) based on said target geometry ($POS_{TARGET}$).

**3.** The method according to Claim 2, wherein said target geometry ($POS_{TARGET}$) is determined so as to maximize the efficiency of the compressor (3) in the current operative condition of the compressor (3) itself.

**4.** The method according to Claim 2 or Claim 3, further comprising:

• determining an effective geometry ($POS_{MEAS}$) of said compressor (3);

and wherein controlling the geometry of said compressor (3) comprises:

• closed-loop controlling the geometry of said compressor (3) based on said target geometry ($POS_{TARGET}$) and said effective geometry ($POS_{MEAS}$).

**5.** The method according to any one of the preceding claims, for a variable-geometry compressor (3) provided with blades (4) that are orientable in response to a control signal (VGC), wherein determining a target geometry ($POS_{TARGET}$) of said compressor (3) comprises:

• determining a target position ($POS_{TARGET}$) of said orientable blades (4),

and wherein controlling the geometry of said compressor (3) comprises:

• generating said control signal (VGC) based on said target position $(POS_{TARGET})$.

**6.** The method according to any one of the preceding claims, wherein said target geometry ($POS_{TARGET}$) is determined based on at least one quantity chosen from the group comprising pressure ($P_{AIR}$), temperature ($T_{AIR}$), and flow rate ($\dot{M}_{AIR}$) of the fluid to be pressurized, pressure ($P_{BOOST}$) and temperature ($T_{BOOST}$) of the pressurized fluid, and engine speed (RPM).

**7.** The method according to Claim 6, wherein determining a target geometry ($POS_{TARGET}$) comprises:

• determining a basic contribution based on the engine speed (RPM); and
• determining said target geometry ($POS_{TARGET}$) based on said basic contribution.

**8.** The method according to Claim 7, wherein determining a target geometry $(POS_{TARGET})$ of said compressor (3) further comprises:

• determining a corrective contribution based on the engine speed (RPM) and of the pressure ($P_{BOOST}$) of the pressurized fluid;

and wherein determining said target geometry ($POS_{TARGET}$) comprises:

• determining said target geometry $(POS_{TARGET})$ based on said basic contribution and said corrective contribution.

**9.** The method according to Claim 8, wherein determining said target geometry $(POS_{TARGET})$ comprises:

• adding said basic contribution and said corrective contribution together.

**10.** The method according to Claim 6, wherein determining a target geometry ($POST_{TARGET}$) comprises:

• determining a corrected flow rate ($\dot{M}_{COR}$) of said compressor (3) based on the pressure $(P_{AIR})$, the temperature $(T_{AIR})$, and the flow rate ($\dot{M}_{AIR}$) of the fluid to be pressurized;
• determining a compression ratio (β) of said compressor (3) based on the pressure ($P_{AIR}$) of the fluid to be pressurized and the pressure $(P_{BOOST})$ of the pressurized fluid; and
• determining said target geometry ($POS_{TARGET}$) based on said corrected flow rate ($\dot{M}_{COR}$) and of said compression ratio (β) of said compressor (3).

**11.** The method according to Claim 6, wherein determining a target geometry ($POS_{TARGET}$) comprises:

  • determining a corrected engine speed ($RPM_{COR}$) based on the flow rate ($\dot{M}_{AIR}$) of the fluid to be pressurized and the pressure ($P_{BOOST}$) and the temperature ($T_{BOOST}$) of the pressurized fluid; and
  • determining said target geometry ($POS_{TARGET}$) based on said corrected engine speed ($RPM_{COR}$).

**12.** The method according to Claim 11, wherein said corrected engine speed ($RPM_{COR}$) is computed according to the following formula:

$$RPM_{COR} = \dot{M}_{AIR} \cdot \frac{120}{\eta_{VOL} \cdot V_{CYL}} \cdot \frac{R \cdot T_{BOOST}}{P_{BOOST}}$$

wherein:

  - $RPM_{COR}$ is the corrected engine speed,
  - $\dot{M}_{ATR}$ is the flow rate of the fluid to be pressurized,
  - $P_{BOOST}$ is the pressure of the pressurized fluid,
  - $T_{BOOST}$ is the temperature of the pressurized fluid,
  - $\eta_{VOL}$ is the coefficient of engine volumetric filling;
  - $V_{CYL}$ is the engine displacement, and
  - $R$ is a characteristic constant of the gaseous mixture taken in by the engine.

**13.** The method according to Claim 1, wherein controlling the geometry of said turbine (2) comprises:

  • controlling the geometry of said turbine (2) based on a target pressure ($P_{TARGET}$) of the pressurized fluid.

**14.** The method according to Claim 12, wherein controlling the geometry of said turbine (2) further comprises:

  • closed-loop controlling the geometry of said turbine (2) based on said target pressure ($P_{TARGET}$) and the effective pressure ($P_{BOOST}$) of the pressurized fluid.

**15.** A method for controlling supercharging pressure of an internal-combustion engine (7) provided with a variable-geometry turbocharger (1) with a variable-geometry turbine (2) and a variable-geometry compressor (3); said control method comprising:

  • controlling the geometry of said turbocharger (1);

said method being **characterized in that** the geometry of said turbocharger (1) is controlled according to the control method of any one of Claims 1 to 14.

**16.** A control device (18) for controlling geometry of a variable-geometry compressor (3), in particular for supplying a pressurized fluid to an internal-combustion engine (7); said control device (18) being configured to implement the control method of any one of Claims 1 to 11.

**17.** A control device (18) for controlling geometry of a variable-geometry turbocharger (1), in particular for supplying a pressurized fluid to an internal-combustion engine (7), said turbocharger (1) comprising a variable-geometry turbine (2) and a variable-geometry compressor (3); said control device (18) being configured to implement the control method of any one of Claims 1 to 14.

**18.** A control device (18) for controlling supercharging pressure ($P_{BOOST}$) of an internal-combustion engine (7) provided with a variable-geometry turbocharger (1) with a variable-geometry turbine (2) and a variable-geometry compressor (3); said control device (18) being configured to implement the control method of Claim 15.

**19.** An internal-combustion engine (7) comprising a variable-geometry turbocharger (1) with a variable-geometry turbine (2) and a variable-geometry compressor (3), and a control device (18) configured to control supercharging pressure ($P_{BOOST}$) of said engine (7) according to Claim 18.

Fig.1

ARIA

GAS

11

12

13

16

3

6

14

15

10

8

7

$\dot{M}_{ENGINE}$

9

$\dot{M}_{AIR}$

$P_{AIR}$

$T_{AIR}$

VGC

$POS_{MEAS}$

2

1

5

VGT

$P_{BOOST}$

$T_{BOOST}$

EGR

18

RPM

17

Fig.2

EP 1 772 608 A1

14

EP 1 772 608 A1

P$_{TARGHET}$

P$_{BOOST}$

RPM          Q

+

−

19

REGOLATORE
DI PRESSIONE

VGT

# Fig.3

RPM, $\dot{M}_{AIR}$, P$_{AIR}$, T$_{AIR}$, P$_{BOOST}$, T$_{BOOST}$

POS$_{TARGHET}$

CONVERSIONE
POS$_{TARGET}$ →
COMANDO  VGC

VGC

# Fig.4

$RPM, \dot{M}_{AIR}, P_{AIR}, T_{AIR}, P_{BOOST}, T_{BOOST}$

POS$_{TARGHET}$

POS$_{MEAS}$

+

-

CONTROLLORE
DI POSIZIONE

20

VGC

Fig.5

Fig.6

RPM, $\dot{M}_{AIR}$, $P_{AIR}$, $T_{AIR}$, $P_{BOOST}$, $T_{BOOST}$

$POS_{TARGHET}$

$POS_{MEAS}$

CONTROLLORE
DI POSIZIONE

$K_P$

$K_I$

$K_D$

$\int$

d / dt

VGC

20

EP 1 772 608 A1

17

Fig.7

Fig.8

Fig.9

$\overset{\circ}{M}_{AIR}$

$P_{BOOST}$

120

R

$\eta_{VOL}$

$V_{CYL}$

$T_{BOOST}$

$RPM_{COR}$

$POS_{TARGET}$

27

28

EP 1 772 608 A1

**European Patent Office**

## EUROPEAN SEARCH REPORT

Application Number

EP 05 42 5711

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/056016 A1 (SUMSER SIEGFRIED ET AL) 17 March 2005 (2005-03-17) * paragraphs [0036] - [0043]; claim 10 * ----- | 1-7, 12-19 | INV. F02B37/24 F02B37/12 F01D7/00 |
| X | WO 2004/038229 A (DAIMLERCHRYSLER AG; FLEDERSBACHER, PETER; HERTWECK, GERNOT; SCHIEDT, S) 6 May 2004 (2004-05-06) * page 7, paragraph 2 - page 9, paragraph 1; figure 1 * ----- | 1-3,5, 12-19 | |
| A | US 2005/022524 A1 (ANDO YOSHIYUKI ET AL) 3 February 2005 (2005-02-03) * paragraphs [0048] - [0054]; figures 2,3 * ----- | 1 | |
| A | WO 2004/022956 A (DAIMLERCHRYSLER AG; FISCHLE, MICHAEL; SPRINGER, ULRICH; STREU, DANIEL) 18 March 2004 (2004-03-18) * page 3, paragraph 2 - page 5, paragraph 1; figures 1,2 * ----- | 1 | TECHNICAL FIELDS SEARCHED (IPC) F02B F01D |

The present search report has been drawn up for all claims

| Place of search | Date of completion of the search | Examiner |
|---|---|---|
| Munich | 24 March 2006 | Tietje, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 42 5711

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2006

| Patent document cited in search report | | Publication date | Patent family member(s) | | Publication date |
|---|---|---|---|---|---|
| US 2005056016 | A1 | 17-03-2005 | DE | 10213897 A1 | 09-10-2003 |
| | | | WO | 03083275 A1 | 09-10-2003 |
| | | | EP | 1488084 A1 | 22-12-2004 |
| | | | JP | 2005521827 T | 21-07-2005 |
| WO 2004038229 | A | 06-05-2004 | DE | 10249471 A1 | 06-05-2004 |
| | | | EP | 1556615 A1 | 27-07-2005 |
| | | | US | 2005265822 A1 | 01-12-2005 |
| US 2005022524 | A1 | 03-02-2005 | NONE | | |
| WO 2004022956 | A | 18-03-2004 | DE | 10237416 A1 | 26-02-2004 |
| | | | EP | 1529161 A1 | 11-05-2005 |
| | | | JP | 2005538288 T | 15-12-2005 |
| | | | US | 2005257520 A1 | 24-11-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0786589 B1